# NEUE EUROPÄISCHE PATENTSCHRIFT

(11) **EP 1 415 535 B2**
(45) Veröffentlichungstag und Bekanntmachung des Hinweises auf die Entscheidung über den Einspruch: **13.01.2010**
(45) Hinweis auf die Patenterteilung: 29.03.2006
(21) Anmeldenummer: 03024317.4
(22) Anmeldetag: 24.10.2003
(51) Int. Cl.: A01M 7/00

(54) **Spitzensystem und Verfahren für ein solches**
Injectionsystem and method for same
Système d'injection et procédé de mise en oeuvre

(30) Priorität: 30.10.2002 US 284002
(43) Veröffentlichungstag der Anmeldung: 06.05.2004
(73) Patentinhaber: DEERE & COMPANY, Moline, Illinois 61265-8098 (US)
(72) Erfinder: Vickers, Michaels T., Saint Paul MN 55110-3302 (US); Junge, Steve A., Johnston, IA 50131 (US)
(74) Vertreter: Holst, Sönke

(56) Entgegenhaltungen:
- EP-A- 0 472 860
- US-A- 4 244 522

## Beschreibung

Die Erfindung betrifft ein Spritzensystem und ein Verfahren für ein solches, mit einem Sprühfahrzeug, einem Versorgungstank zur Speicherung von auszubringendem Material, einem durch das Sprühfahrzeug beförderbaren Tank zur Speicherung einer Menge des auszubringenden Materials und einer mit dem Tank operativ verbundenen Spritzvorrichtung zum Ausbringen des Materials aus dem Tank auf den Zielbereich. Das Verfahren umfasst die Eingabe von Daten in die Rechenanlage, welche ein Feld, eine Bepflanzung und das auszubringende Material betreffen, das Ausbringen des Materials auf das Feld und wenigstens ein Auffüllen des Tanks mit Material, wie aus dem Dokument US 4 244 522 bekannt.

Herkömmliche Spritzmaschinen, wie z. B. landwirtschaftliche Sprühfahrzeuge, tragen üblicherweise einen oder mehrere Tanks zur Aufnahme von Wasser oder chemischen Produkten. Ein mit mehreren Spritzköpfen versehenes Spritzgestänge ist zum Ausbringen, beispielsweise von Chemikalien auf den Pflanzenbestand eines Feldes, mit den Tanks des Sprühfahrzeugs verbunden. Wenn ein Tank leer ist, muss die Bedienperson zurück zu einem Haupt- oder Versorgungstank fahren, um den Tank des Sprühfahrzeugs aufzufüllen, und anschließend auf das Feld zurückkehren und mit dem Spritzvorgang näherungsweise dort fortfahren, wo er zuletzt unterbrochen wurde. Üblicherweise sind aufgrund der Größe der Felder mehrere Tankfüllungen notwendig um den Spritzvorgang für ein gegebenes Feld abzuschließen. Der Auffüllvorgang des Tanks des Sprühfahrzeugs ist ein zeitraubender, manueller Vorgang, der unter der Verwendung von Pumpen und Schläuchen von der Bedienperson des Sprühfahrzeugs ausgeführt wird und ein Beurteilungsvermögen für die benötigte Menge und für das Mischungsverhältnis an chemischem Lösungsmittel erfordert. Die Zeit, die zum Auffüllen des Tanks des Sprühfahrzeugs benötigt wird, reduziert maßgeblich die Produktivität der Maschine.

Die Bedienperson benötigt Beurteilungsvermögen bei der Bestimmung der Menge an Chemikalien, die in den Tank des Sprühfahrzeugs gefüllt werden müssen, da nach Beendigung des Spritzvorgangs auf dem Feld die in dem Tank des Sprühfahrzeugs verbleibenden Rückstände an Chemikalien entsorgt werden müssen. Um die Menge zu bestimmen, muss die Bedienperson wissen oder abschätzen, wie groß die noch zu spritzende verbleibende Fläche ist, um dann genauestens die auf das Sprühfahrzeug zu übertragende Menge an Wasser und Chemikalien abzumessen. Die Bedienperson muss des Weiteren dafür Sorge tragen, dass ein richtiges Mischungsverhältnis von Wasser und Chemikalien angewendet wird, um ein optimales Spritzergebnis zu erhalten. Eine Mischungskonzentration, die geringer ist als die auf dem Etikett der Chemikalie empfohlene Mischungskonzentration, resultiert in eine zu geringe Schädlingsbekämpfung, wohingegen eine zu hohe Mischungskonzentration Pflanzen- oder Umweltschäden verursachen könnte. Das Mischen der Chemikalie wird meistens durch Einfüllen der Chemikalie in eine Tankdeckelöffnung des Sprühfahrzeugs oder in eine an dem Sprühfahrzeug oder am Versorgungstank vorgesehene Einfülleinrichtung vorgenommen, mit der die Chemikalie einem Wasserstrom beigemischt wird, wenn der Tank des Sprühfahrzeugs aufgefüllt wird. Die Bedienperson kann dabei während des Auffüllvorgangs einer Belastung durch Chemikalien ausgesetzt sein. Des Weiteren können während des Auffüllvorgangs Chemikalien verschüttet werden und dadurch der Boden oder die Sprühfahrzeugausrüstung verunreinigt werden.

Das Protokollieren der verwendeten Chemikalien ist ebenfalls eine Aufgabe der Bedienperson, die nach Beenden des Spritzvorgangs Daten bezüglich der Menge der verwendeten Chemikalien und der bearbeiteten Flächen eingeben muss. Dies ist ebenfalls ein zeitraubender Prozess, welcher oft aufgrund von Zeitdruck ignoriert oder übersehen wird.

Die der Erfindung zugrunde liegende Aufgabe wird darin gesehen, ein Spritzensystem und ein Verfahren für eine solche der eingangs genannten Art anzugeben, durch welches die vorgenannten Probleme überwunden werden.

Die Aufgabe wird erfindungsgemäß durch die Lehre des Patentanspruchs 1 und 8 gelöst. Weitere vorteilhafte Ausgestaltungen und Weiterbildungen der Erfindung gehen aus den Unteransprüchen hervor.

Erfindungsgemäß wird ein Spritzensystem der eingangs genannten Art mit einer mit einem Fangtrichter und einem durch den Fangtrichter aufnehmbare Sonde ausgebildete Kopplungseinrichtung versehen, welche zum Auffüllen des Tanks mit Material aus dem Versorgungstank in einen Verbindungszustand bringbar ist. Das Spritzensystem umfasst einen fahrbaren Teil, der unter anderem das Sprühfahrzeug, die Spritzvorrichtung und den Tank aufweist und einen fahrbaren aber im Einsatz stationären Teil, der unter anderem einen Versorgungstank aufweist. Das Auffüllen umfasst ein automatisches Ankoppeln des Versorgungstanks an den Tank und vorzugsweise ein automatisches Aufzeichnen der Daten, die den der Spritzvorrichtung zugeführten und von der Spritzvorrichtung ausgebrachten Materialfluss betreffen.

Das Spritzensystem enthält eine Spritzvorrichtung zum Ausbringen von Material aus dem Tank für die Spritzvorrichtung auf einen Zielbereich, wie z. B. auf einen Pflanzenbestand eines Feldes. Die Spritzvorrichtung kann durch einen Traktor oder durch ein anderes Antriebsfahrzeug gezogen oder als selbstfahrendes Sprühfahrzeug ausgebildet sein. Das auszubringende Material kann flüssig, wie z. B. eine chemische Lösung, fest, wie z. B. Dünger oder gasförmig, wie z. B. Ammoniak sein. Das Spritzensystem enthält eine vorzugsweise an der Spritzvorrichtung angeordnete Datenerfassungs- und Datenübertragungseinrichtung, mit der Spritz- bzw. Ausbringdaten an eine Rechenanlage oder einen Datenprozessor an dem Sprühfahrzeug oder an einer anderen entfernten Position, übertragen werden können. Der Datenprozessor enthält Software, mittels derer sowohl die Daten der Spritzvorrichtung, als auch Eingangsdaten, die den Pflanzenbestand, das Feld und die verwendeten Chemikalien betreffen, aufgenommen und gespeichert werden können. Das Spritzensystem enthält des Weiteren ein Positionsbestimmungssystem (GPS), mit welchem der Ausbringvorgang navigiert werden kann. Die Software enthält eine Zeiterfassung des Ausbringvorgangs. Somit sind Informationen zum Umfang und zur Rückverfolgbarkeit des verbrauchten Materials automatisch verfügbar.

Das Spritzensystem weist einen Fangtrichter auf, der beispielsweise an dem Sprühfahrzeug bzw. dem Traktor oder an dem Versorgungstank bzw. einem Haupttank angeordnet sein kann, wobei der Fangtrichter mit einem Kopplungsteil gekoppelt wird, welches entsprechend am Versorgungstank bzw. am Haupttank oder an dem Sprühfahrzeug bzw. am Traktor angeordnet sein kann. Durch Koppeln des Fangtrichters an die Sonde wird eine Kopplungseinrichtung geschaffen, mit der der Tank für die Spritzvorrichtung automatisch mit Chemikalien aus dem Versorgungstank aufgefüllt werden kann, ohne dass eine manuelle Verbindung von Schläuchen oder eine Aktivierung von Pumpen erforderlich ist. Durch einen derartigen unbemannten Auffüllvorgang kann vermieden werden, dass Chemikalien verschüttet und Personen den Chemikalien ausgesetzt werden. Neben der flüssigkeitsführenden Funktion bietet die durch den Fangtrichter und die Sonde ausgebildete Kopplungseinrichtung eine elektrische Verbindung zur automatischen, den Auffüllvorgang betreffenden Informationsübertragung an die Rechenanlage. Andere Informationen über das Material können ebenfalls zwischen dem Sprühfahrzeug und dem Versorgungstank kommuniziert werden. Zu Führungszwecken kann eine Navigationseinrichtung geboten werden, mit der die Position des Sprühfahrzeugs relativ zum Versorgungstank und relativ zum Feld bestimmbar ist. In einer weiteren Ausgestaltung kann eine direkte kabellose Verbindung zwischen Versorgungstank und Sprühfahrzeug eingerichtet werden, so dass auf jegliche elektrische Kontakte zwischen Fangtrichter und Sonde verzichtet werden kann.

Das erfindungsgemäße Spritzensystem ermöglicht ein besseres Handhaben von Material und eine Optimierung des Auffüllvorgangs für die Spritzvorrichtung oder für das Sprühfahrzeug. Ein weiterer Vorteil besteht darin, dass ein Koppelsystem geschaffen wird, mit dem der Transfer von Material und Informationsdaten zwischen einem Versorgungstank und einem Sprühfahrzeug ohne manuelles Einschreiten ermöglicht wird. Ein weiterer Vorteil besteht darin, das Mittel und Verfahren geschaffen werden, mit denen eine elektronische Kommunikation zwischen dem Versorgungstank bzw. dem Haupttank und der Spritzvorrichtung oder dem Sprühfahrzeug ermöglicht wird, um den Auffüllvorgang für die Spritzvorrichtung zu steuern und aufzuzeichnen. Ferner wird ein Spritzensystem geschaffen, bei dem eine Rechenanlage und dazugehörige Software eingesetzt werden, mit denen die den Auffüllvorgang betreffenden Daten aufgezeichnet und abgespeichert werden können. Des Weiteren bietet ein erfindungsgemäßes Spritzensystem den Vorteil, dass der gesamte Verfahrensweg der auszubringenden Chemikalie elektronisch verfolgt werden kann, so dass eine vollständige Protokollierung der Verwendung der Chemikalie, ausgehend von ihrem Originalbehälter bis hin zum Ort ihrer letzten Anwendung erfolgen kann.

Anhand der Zeichnungen, die ein Ausführungsbeispiel der Erfindung zeigen, werden nachfolgend die Erfindung sowie weitere Vorteile und vorteilhafte Weiterbildungen und Ausgestaltungen der Erfindung näher beschrieben und erläutert.

Es zeigt:

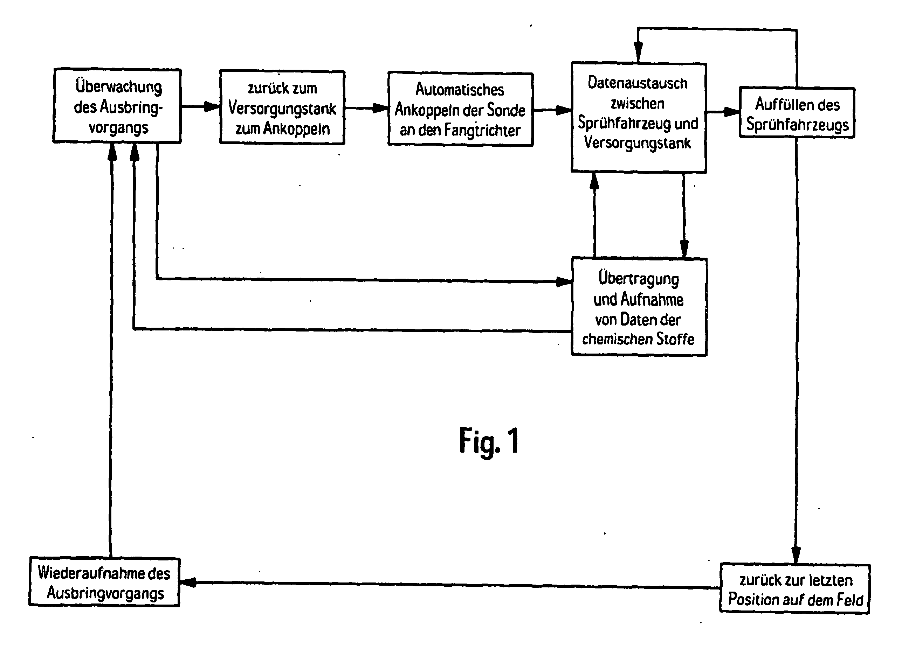

- Fig. 1: ein schematisches Flussdiagramm eines erfindungsgemäßen Spritzverfahrens und
- Fig. 2: eine schematische Seitenansicht mit einer erfindungsgemäßen Koppelanordnung zum Befüllen eines Tanks für eine Spritzvorrichtung aus einem Versorgungstank.

Das erfindungsgemäße Spritzensystem enthält ein selbstfahrendes Sprühfahrzeug 10 mit einem oder mehreren Tanks 12 und einer oder mehreren Spritzdüsen 14, die in Verbindung mit jedem Tank 12 stehen. Das Sprühfahrzeug 10 könnte auch eine von einem Traktor gezogene Anhängespritze sein. Das Sprühfahrzeug 10 enthält eine aktivierbare Pumpe (nicht gezeigt), welche Spritzmittel zum Ausbringen durch die Düsen 14 auf den Pflanzenbestand eines Feldes aus den Tank 12 fördert.

Das Sprühfahrzeug 10 enthält für jeden Tank 12 einen Schlauch 16, welcher in Flüssigkeitsverbindung mit einer sich in Vorwärtsrichtung zum Sprühfahrzeug 10 erstreckenden Sonde 18 steht. Hierbei sei darauf hingewiesen, dass die Sonde 18 sich auch vom Sprühfahrzeug 10 nach hinten erstrecken kann, um ein einfaches Ankoppeln zu gewährleisten, wie im Folgenden beschrieben wird.

Ein großvolumiger Haupttank oder Versorgungstank 20 ist zur Auffüllung des Tanks 12 des Sprühfahrzeugs 10 vorgesehen. Der Versorgungstank 20 ist auf einem Anhänger 22 montiert, wobei der Versorgungstank 20 selbstverständlich auch stationär auf dem Boden oder auf einem anderen Fahrzeug positioniert sein kann. Eine Flüssigkeitsleitung 24 führt von dem Versorgungstank 20 zu einer Pumpe 26. Die Pumpe 26 pumpt Wasser oder eine chemische Lösung über einen Schlauch 24 durch eine Durchflussmesseinrichtung 28 zu einem Fangtrichter 36, welcher zur Aufnahme und Ankopplung der Sonde 18 ausgelegt ist. Die den Fangtrichter 36 und die Sonde 18 aufweisende Koppelanordnung ist ähnlich ausgebildet wie ein "im Flug"-Auffüllsystem für Flugzeuge. Hierbei ist es auch möglich, dass die Sonde 18 und der Fangtrichter 36 bezüglich des Sprühfahrzeugs 10 und des Versorgungstanks 20 umgekehrt angeordnet sind, wenn es zweckdienlich ist. Andere automatische Koppelanordnungen können dabei auch Verwendung finden. Sobald der Fangtrichter 36 und die Sonde 18 gekoppelt sind, kann Wasser oder eine chemische Lösung im Versorgungstank 20 mittels der Pumpe 26 oder auf andere Weise in die Tanks 12 des Sprühfahrzeugs 10 gefördert werden, während eine präzise Durchflussmessung durch die Durchflussmesseinrichtung 28 erfolgt. Das Koppeln des Fangtrichters 36 und der Sonde 18 kann schnell und einfach durchgeführt werden, indem die Komponenten aufeinander zu bewegt werden, etwa durch Ausstrecken der Sonde 18 oder/und durch Bewegen des Sprühfahrzeugs 10 in Vorwärtsrichtung. Die ausgeweitete Öffnung des Fangtrichters 36 ermöglicht ein einfaches Ausrichten der Sonde 18. Die Sonde 18 kann nach Belieben aus dem Sprühfahrzeug 10 herausgestreckt und hineingeschoben werden.

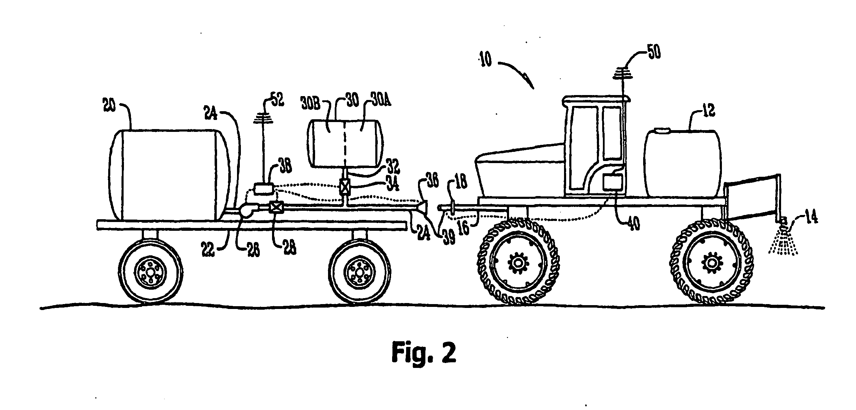

Auf dem Anhänger 22 ist des Weiteren ein Speichertank 30 für Chemikalien angeordnet. Der chemische Speichertank 30 kann fest installiert oder vorzugsweise einfach lösbar angeordnet sein, so dass ein Austauschen der chemischen Speichertanks 30 vereinfacht wird. Der chemische Speichertank 30 ist über einen Schlauch 32 mit der Flüssigkeitsleitung 24 verbunden. Dadurch wird ermöglicht, dass Chemikalien über eine Durchflussmesseinrichtung 34 in die Flüssigkeitsleitung 24 gespeist und der Chemikalienfluss präzise abgemessen werden kann. Selbstverständlich können auch mehrere Speichertanks für Chemikalien, wie in Figur 2 mit den Bezugszeichen 30A und 30B angedeutet, in das Spritzensystem integriert werden.

Der Fangtrichter 36 und die Sonde 18 weisen des Weiteren elektrische Verbindungen 39 auf, derart, dass durch Koppeln des Fangtrichters 36 an die Sonde 18 automatisch Daten an einen Datenprozessor 40 des Sprühfahrzeugs 10 und an einen Datenprozessor 38 auf dem Anhänger 22 übertragen werden können, wobei die Daten mit dem Auffüllvorgang in Beziehung stehen und unter anderem die Menge und die Art des aus dem Versorgungstank 20 und aus dem Speichertank 30 (oder aus den Speichertanks 30A und 30B) an den Tank 12 des Sprühfahrzeugs 10 geförderten Materials angeben. Zusätzliche Daten können an dem Datenprozessor 40 des Sprühfahrzeugs 10 und an dem Datenprozessor 38 des Anhängers 22 eingegeben oder an diese übertragen werden, wie z. B. der Ort und die Größe eines zu spritzenden Feldes, die Art eines Pflanzenbestands auf einem Feld und Daten über den Spritzvorgang selbst. Derartige Daten können Informationen enthalten, die das Material betreffen und Anforderungen berücksichtigen, um notwendige Auffüllvorgänge für den Tank 12 des Sprühfahrzeugs 10 und den Versorgungstank 20 vorauszuberechnen, so dass der Betreiber und/oder ein Materialzulieferer mit erweiterten Informationen versorgt werden. Ein Positionsbestimmungssystem (GPS) 50, 52, kann eine direkte kabellose Kommunikationsverbindung zwischen Anhänger 22 und Sprühfahrzeug 10 aufweisen, bzw. weist diese auf, um jegliche notwendige elektrische Kontakte 39 im Fangtrichter 36 oder in der Sonde 18 zu vermeiden und um eine direkte Kommunikation zwischen Anhänger 22 und Sprühfahrzeug 10 während eines Spritzvorgangs zu ermöglichen. Ein an dem Sprühfahrzeug 10 vorgesehenes automatisches Rangiersystem und/oder die Komponenten der Koppelanordnung (Sonde 18 und Fangtrichter 36) können während eines Koppelvorgangs von den Datenprozessoren 38, 40 versorgt werden.

Die Eingabemittel für die den Pflanzenbestand, das Feld, das Material und den Spritzvorgang betreffenden Betriebsparameter, als auch für die GPS-Daten, enthalten konventionelle Sensor-und Übertragungseinrichtungen, welche sowohl manuell als auch automatisch betreibbar sind. Somit kann der Betreiber die Daten für den Pflanzenbestand, das Feld und das Material manuell in den Datenprozessor 40 eingeben, während die Daten für den Spritzvorgang und die GPS-Daten automatisch für den Datenprozessor 40 ermittelt werden. Des Weiteren kann das Sprühfahrzeug 10 auch mit einem Positionsbestimmungssystem (GPS) 50 ausgerüstet sein, welches operativ mit dem Datenprozessor 40 verbunden ist, so dass die Position des Sprühfahrzeugs 10 kontinuierlich und präzise überwacht werden kann. Der Versorgungstank 20 kann ebenfalls mit einem Positionsbestimmungssystem (GPS) 52 versehen sein, wie in Figur 2 dargestellt. Der Datenprozessor 38 des Versorgungstanks 20 ist über die elektrischen Kontakte 39 am Fangtrichter 36 und an der Sonde 18 ebenfalls operativ mit dem Datenprozessor 40 verbunden.

Im Betrieb werden die Felddaten, die Daten des Pflanzenbestands und die Daten der chemischen Applikation nach Wahl des Betreibers entweder in den Datenprozessor 40 des Sprühfahrzeugs 10 oder in den Datenprozessor 38 des Versorgungstanks 20 eingegeben oder aufgezeichnet. Die Daten für die chemische Applikation können die Art der Chemikalien, das Mischungsverhältnis und die zu erzielende Ausbringrate für den Spritzvorgang enthalten. Der Fangtrichter 36 und die Sonde 18 werden automatisch gekoppelt, sobald das Sprühfahrzeug 10 in Richtung des Anhängers 22 bewegt wird. Die Datenprozessoren 38, 40 berechnen genau die benötigte Menge an Material, wie z. B. an Wasser und an Chemikalien, die für den Spritzvorgang benötigt werden. Durch Überwachung der Durchflussmesseinrichtungen 28, 34 und durch Steuerung der Pumpe 26 und verschiedener Ventile (nicht gezeigt) wird die genaue Menge in den Tank 12 des Sprühfahrzeugs 10 übertragen. Eine elektronische Aufzeichnung der übertragenen Mengen kann in den Datenprozessoren 38, 40 gespeichert werden. Das Sprühfahrzeug 10 kann dann von dem Anhänger 22 wegbewegt werden, woraufhin sich der Fangtrichter 36 und die Sonde 18 automatisch entkoppeln. Der vollständige Auffüllvorgang kann vollzogen werden, ohne dass der Betreiber des Sprühfahrzeugs 10 die Kabine des Sprühfahrzeugs 10 verlassen muss und ohne dass irgendeine Hilfsperson am Anhänger 22 erforderlich ist. Die Spritzpumpen werden aktiviert und das Sprühfahrzeug 10 wird auf konventionelle Weise über das Feld geführt, während das Positionsbestimmungssystem (GPS) 50 automatisch den Spritzvorgang führt und die Daten des Spritzvorgangs automatisch an den Datenprozessor 40 zur Aufzeichnung übertragen werden. Die Ausbringrate des Materials kann innerhalb eines Feldes in Abhängigkeit von den Eingabedaten, mit denen der Datenprozessor 40 versorgt wurde, variieren. Wenn der Tank 12 einen Auffüllzustand erreicht, generiert das Spritzensystem ein sichtbares und/oder hörbares Signal, so dass der Betreiber zur Versorgungsstation zum Auffüllen zurückkehren kann. Das Positionsbestimmungssystem (GPS) 50 informiert den Betreiber exakt darüber, wohin er bei der Wiederaufnahme des Spritzvorgangs zurückkehren muss, ohne dass eine Überlappung des auszubringenden Materials auftritt und ohne dass eine zu spritzende Stelle auf dem Feld ausgelassen wird. Das Positionsbestimmungssystem (GPS) 50 kann auch für einen unbemannten Spritzvorgang eingesetzt werden, bei dem das Sprühfahrzeug 10 ohne Betreiber über das Feld geführt wird.

Der Versorgungstank 20 kann auch einen Antriebsmotor und ein Navigationssystem aufweisen (nicht gezeigt), welches mit dem Positionsbestimmungssystem (GPS) 52 gekoppelt ist und in Kommunikation mit dem Navigationssystem des Sprühfahrzeugs 10 steht, so dass der Versorgungstank 22 in einem unbemannten Modus, in Abhängigkeit von den Auffüllbedürfnissen des Sprühfahrzeugs 10 und von anderen Gesichtspunkten, wie z. B. Gegebenheiten des Feldes und des Pflanzenbestandes, an einen präzisen Auffüllungsort geführt wird. Zu Übertragung der Auffüllbedürfnisse für den Versorgungstank 20, kann dieser auch mit einer Hauptbasisstation oder mit einem Zulieferunternehmen für Material verbunden sein.

Die Software des Datenprozessors 40 enthält auch eine Zeiterfassung, so dass die Ausbringzeit für das Material für jeden einzelnen Bereich aufgezeichnet werden kann.

Somit können Präzisionslandwirtschaftsmethoden genutzt werden, durch die der Betreiber vom Sitz in der Kabine des Sprühfahrzeugs 10 aus mit genauen und detaillierten Informationen bezüglich der Art des auszubringenden Materials, des Mischungsverhältnisses, der Feldgröße, des abgedeckten Bereiches, der Position an der ein Spritzvorgang beendet wurde und Auffüllerfordernissen des Tanks 12 des Sprühfahrzeugs 10, versorgt wird. Das Spritzensystem bietet eine höhere Effizienz, eine Verminderung der Belastung der Umwelt, der Ausrüstung und des Personals, eine genauere Dosierung, reduzierte Materialverluste und die Möglichkeit zur Ausbringung mehrerer Materialien. Des Weiteren liefert das Spritzensystem eine erweiterte Anzeige, für die von dem Betreiber durchzuführenden Auffüllvorgänge an dem Sprühfahrzeug 10 oder für die durch den Betreiber oder ein Zulieferunternehmen für Material durchzuführenden Auffüllvorgänge am Versorgungstank 20. Ferner stellt das Spritzensystem ein zweckmäßiges Planungs- und Materialfolgesystem dar.

Somit führt das verbesserte Spritzensystem der vorliegenden Erfindung zu einer höheren Produktivität und zu einem verminderten Risiko beim Ausbringen von Material auf den Pflanzenbestand eines Feldes oder einem anderem Ort.

## Patentansprüche

1. Spritzensystem, mit einem Sprühfahrzeug (10), einem Versorgungstank (20) zur Speicherung von auszubringendem Material, einem durch das Sprühfahrzeug (10) beförderbaren Tank (12) zur Speicherung einer Menge des auszubringenden Materials und einer mit dem Tank (12) operativ verbundenen Spritzvorrichtung (14) zum Ausbringen des Materials aus dem Tank (12) auf einen Zielbereich, **dadurch gekennzeichnet, dass** eine mit einem Fangtrichter (36) und einer durch den Fangtrichter (36) aufnehmbare Sonde (18) ausgebildete Kopplungseinrichtung vorgesehen ist, welche zum Auffüllen des Tanks (12) mit Material aus dem Versorgungstank (20) automatisch in einen Verbindungszustand bringbar ist, wobei der Fangtrichter (36) und die Sonde (18) Flüssigkeit führende Verbindungsleitungen (16, 24) für das Material und elektronische Verbindungsleitungen (39) zur Übertragung von Materialtransferdaten des Tanks (12) aufweisen und das Sprühfahrzeug (10) eine Rechenanlage (40) aufweist, mit welcher Daten der elektronischen Verbindungsleitungen (39) empfangen werden können.

2. Spritzensystem nach Anspruch 1, **dadurch gekennzeichnet, dass** eine Eingabestation enthalten ist, mit welcher den Zielbereich und das Material betreffende Daten in die Rechenanlage (40) eingebbar sind.

3. Spritzensystem nach einem der Ansprüche 1 oder 4, **dadurch gekennzeichnet, dass** während des Ausbringens Ausbringdaten von der Rechenanlage (40) aufzeichenbar sind.

4. Spritzensystem nach einem der Ansprüche 1 bis 3, **dadurch gekennzeichnet, dass** die Rechenanlage (40) Software zur Aufzeichnung und Speicherung von Daten enthält.

5. Spritzensystem nach einem der Ansprüche 2 bis 4, **dadurch gekennzeichnet, dass** mit der Eingabestation Eingabedaten, die einen Pflanzenbestand, ein Feld, das Material und den Ausbringvorgang betreffen, an einen Datenprozessor der Rechenanlage (40) übertragbar und Informationen zum Umfang und zur Rückverfolgbarkeit des verbrauchten Materials verfügbar sind.

6. Spritzensystem nach Anspruch 4 oder 5, **dadurch gekennzeichnet, dass** die Software eine Zeiterfassung zur zeitlichen Erfassung der Daten des Ausbringvorgangs enthält.

7. Spritzensystem nach einem der Ansprüche 4 bis 6, **dadurch gekennzeichnet, dass** ein Positionsbestimmungssystem (50, 52) mit der Rechenanlage (40) verbunden ist, mit welchem eine Navigation beim Ausbringen von Material realisierbar ist.

8. Verfahren zum Ausbringen von Material für ein Spritzensystem nach einem der Ansprüche 1 bis 7, wobei das Verfahren die Eingabe von Daten in die Rechenanlage (40), welche ein Feld, einen Pflanzenbestand und das auszubringende Material betreffen, das Ausbringen des Materials auf das Feld und wenigstens ein Auffüllen des Tanks (12) mit Material umfasst, **dadurch gekennzeichnet, dass** das Auffüllen ein automatisches Ankoppeln des Versorgungstanks (20) an den Tank (12) umfasst und während des Auffüllens ein automatisches Aufzeichnen der Daten durchgeführt wird, die dem der Spritzvorrichtung (14) zugeführten und von der Spritzvorrichtung (14) ausgebrachten Materialfluss betreffen.

9. Verfahren nach Anspruch 8, **dadurch gekennzeichnet, dass** eine Navigation für das Ausbringen von Material vorgesehen ist und nach dem Auffüllen das Sprühfahrzeug selbsttätig (10) an den Ort geführt wird, an dem das Ausbringen von Material unterbrochen wurde.

10. Verfahren nach Anspruch 9, **dadurch gekennzeichnet, dass** eine Steuerung der Navigation und eine Aufzeichnung durchgeführter Verfahrensschritte erfolgt.

11. Verfahren nach einem der Ansprüche 8 bis 10, **dadurch gekennzeichnet, dass** die aufgezeichneten Daten zeiterfasst werden.

12. Verfahren nach einem der Ansprüche 8 bis 11, **dadurch gekennzeichnet, dass** ein Datenprozessor (52) am Versorgungstank (20) vorgesehen ist, und während des Auffüllens zwischen dem Datenprozessor (52) am Versorgungstank (20) und der Rechenanlage (50) an dem Sprühfahrzeug (10) ein Datenaustausch erfolgt.

13. Verfahren nach Anspruch 12, **dadurch gekennzeichnet, dass** der Datenprozessor (52) am Versorgungstank (20) und die Rechenanlage (40) an dem Sprühfahrzeug (10) automatisch miteinander verbunden werden.

14. Verfahren nach einem der Ansprüche 8 bis 13, **dadurch gekennzeichnet, dass** das automatische Ankoppeln des Versorgungstanks (20) an den Tank (12) ein Ankoppeln der Sonde (18) an den Fangtrichter (36) zur Einrichtung einer Übertragungsvorrichtung für Flüssigkeit umfasst, wobei eine Pumpe (26) aktiviert wird, um eine Menge an Material vom Versorgungstank (20) in den Tank (12) über die eingerichtete Übertragungsvorrichtung abzugeben.

15. Verfahren nach einem der Ansprüche 8 bis 14, **dadurch gekennzeichnet, dass** eine Abgabe an Material automatisch erfolgt, nachdem die Sonde (18) und der Fangtrichter (36) miteinander gekoppelt sind.

## Claims

1. Sprayer system with a sprayer vehicle (10), a primary tank (20) for storing material to be sprayed, a tank (12), which can be towed by the sprayer vehicle (10), for storing a quantity of the material to be sprayed and a spraying device (14) operatively connected to the tank (12) for spraying material from the tank (12) onto a target area, **characterised in that** a coupling system is provided, which is configured with a drogue (36) and a probe (18) adapted to be received by the drogue (36) and which can be brought automatically into a connection state for filling the tank (12) with material from the primary tank (20), that. the drogue (36) and the probe (18) have fluid connection hoses (16, 24) for the material and electronic communication lines (39) for transmitting material transfer data of the tank (12) and that the sprayer vehicle (10) has a computer system (40), with which data from the electronic communication lines (39) can be received.

2. Sprayer system according to Claim 1, **characterised in that** an input station is included, with which the target area and data relating to the material can be input into the computer system (40).

3. Sprayer system according to one of Claims 1 or 2, **characterised in that** spraying data can be recorded during spraying by the computer system (40).

4. Sprayer system according to one of Claims 1 to 3, **characterised in that** the computer system (40) contains software for recording and storing data.

5. Sprayer system according to one of Claims 2 to 4, **characterised in that** with the input station input data relating to a crop, a field, the material and the spraying operation can be transmitted to a data processor of the computer system (40) and information concerning the scope and the traceability of the material used are available.

6. Sprayer system according to Claim 4 or 5, **characterised in that** the software includes a time stamp for time stamping the data of the spraying operation.

7. Sprayer system according to one of Claims 4 to 6, **characterised in that** a global positioning system (50, 52) is connected to the computer system (40), with which tracking can be performed during spraying of the material.

8. Method for spraying material for a sprayer system according to one of Claims 1 to 7, wherein the method comprises the input of data into the computer system (40), which relate to a field, a crop and the material to be sprayed, spraying of the material onto the field and at least one filling of the tank (12) with material, **characterised in that** filling comprises automatically coupling the primary tank (20) to the tank (12), and during filling the data relating to the material flow delivered to the spraying device (14) and sprayed by the spraying device (14) are automatically recorded.

9. Method according to Claim 8, **characterised in that** tracking is provided for the spraying of material and after filling the sprayer vehicle (10) is automatically guided to the location at which the spraying of material was interrupted.

10. Method according to Claim 9, **characterised in that** the tracking is controlled and process steps performed are recorded.

11. Method according to one of Claims 8 to 10, **characterised in that** the recorded data are time stamped.

12. Method according to one of Claims 8 to 11, **characterised in that** a data processor (52) is provided on the primary tank (20), and during filling an exchange of data occurs between the data processor (52) on the primary tank (20) and the computer system (40) on the sprayer vehicle (10).

13. Method according to Claim 12, **characterised in that** the data processor (52) on the primary tank (20) and the computer system (40) on the sprayer vehicle (10) are automatically connected to one another.

14. Method according to one of Claims 8 to 13, **characterised in that** the automatic coupling of the primary tank (20) to the tank (12) comprises coupling the probe (18) to the drogue (36) for fitting a transfer device for fluid, wherein a pump (26) is activated to discharge a quantity of material from the primary tank (20) into the tank (12) via the fitted transfer device.

15. Method according to one of Claims 8 to 14, **characterised in that** a discharge of material occurs automatically after the probe (18) and the drogue (36) are coupled to one another.

## Revendications

1. Système de pulvérisation comportant un véhicule de pulvérisation (10), une cuve d'alimentation (20), dans laquelle est stockée la matière à distribuer, un réservoir (12) pouvant être transporté par le véhicule de pulvérisation (10) en vue de stocker une quantité de matière à distribuer, et un dispositif de pulvérisation (14), communiquant en cours de service avec le réservoir (12) et destiné à distribuer la matière hors du réservoir (12) sur une zone cible, **caractérisé en ce qu'**il est prévu un dispositif de couplage, qui est conçu avec un entonnoir d'écoulement (36) et une sonde (18) pouvant être reçue par l'entonnoir d'écoulement (36) et qui peut être amené automatiquement dans une position de liaison en vue de remplir le réservoir (12) avec la matière contenue dans la cuve d'alimentation (20), **en ce que** l'entonnoir d'écoulement (36) et la sonde (18) comportent des conduites de liaison (16, 24) pour la matière, dans lesquelles circule un liquide, et des lignes de liaison (39) électroniques pour la transmission de données du réservoir (12) sur le transfert de la matière et **en ce que** le véhicule de pulvérisation (10) comporte une unité de calcul (40), par laquelle les données des lignes de liaison (39) électroniques peuvent être reçues.

2. Système de pulvérisation selon la revendication 1, **caractérisé en ce qu'**il comporte un poste de saisie, qui permet d'entrer dans l'unité de calcul (40) la zone cible et les données relatives à la matière.

3. Système de pulvérisation selon la revendication 1 ou 2, **caractérisé en ce que**, pendant la distribution, des données relatives à la distribution peuvent être enregistrées par l'unité de calcul (40).

4. Système de pulvérisation selon l'une quelconque des revendications 1 à 3, **caractérisé en ce que** l'unité de calcul (40) comporte des logiciels destinés à l'enregistrement et au stockage des données.

5. Système de pulvérisation selon l'une quelconque des revendications 2 à 4, **caractérisé en ce que** le poste de saisie permet de transmettre vers un processeur de données de l'unité de calcul (40) des données d'entrée, qui concernent la quantité de végétaux sur pied, un champ, la matière et le processus de distribution, et de mettre à disposition des informations sur le volume et sur la traçabilité de la matière.

6. Système de pulvérisation selon la revendication 4 ou 5, **caractérisé en ce que** le logiciel contient un système d'enregistrement horaire pour un enregistrement chronologique des données du processus de distribution.

7. Système de pulvérisation selon l'une quelconque des revendications 4 à 6, **caractérisé en ce qu'**un système de détermination de la position (50, 52) est relié à l'unité de calcul (40) et permet de réaliser une navigation lors de la distribution de la matière.

8. Procédé de distribution de matière pour un système de pulvérisation selon l'une quelconque des revendications 1 à 7, le procédé englobant l'entrée de données, concernant un champ, la quantité de végétaux sur pied et la matière à distribuer, dans l'unité de calcul (40), la distribution de la matière sur le champ et au moins un remplissage du réservoir (12) avec la matière, **caractérisé en ce que** le remplissage englobe un couplage automatique de la cuve d'alimentation (20) avec le réservoir (12) et, pendant le remplissage, il est effectué un enregistrement automatique des données qui concernent le flux de matière acheminé vers le dispositif de pulvérisation (14) et distribué par le dispositif de pulvérisation (14).

9. Procédé selon la revendication 8, **caractérisé en ce qu'**une navigation pour la distribution de la matière est prévue et, après le remplissage, le véhicule de pulvérisation (10) est amené automatiquement sur le lieu où la distribution de la matière avait été interrompue.

10. Procédé selon la revendication 9, **caractérisé en ce qu'**il est effectué une commande de la navigation et un enregistrement des étapes du procédé exécutées.

11. Procédé selon l'une quelconque des revendications 8 à 10, **caractérisé en ce que** les données enregistrées sont enregistrées en fonction du temps.

12. Procédé selon l'une quelconque des revendications 8 à 11, **caractérisé en ce qu'**un processeur de données (52) est prévu sur la cuve d'alimentation (20) et, pendant le remplissage, un échange de données est assuré entre le processeur de données (52) sur la cuve d'alimentation (20) et l'unité de calcul (40) sur le véhicule de pulvérisation (10).

13. Procédé selon la revendication 12, **caractérisé en ce que** le processeur de données (52) sur la cuve d'alimentation (20) et l'unité de calcul (40) sur le véhicule de pulvérisation (10) sont automatiquement reliés l'un à l'autre.

14. Procédé selon l'une quelconque des revendications 8 à 13, **caractérisé en ce que** le couplage automatique de la cuve d'alimentation (20) avec le réservoir (12) englobe un couplage de la sonde (18) à l'entonnoir d'écoulement (36) pour la mise en place d'un dispositif de transmission pour le liquide, une pompe (26) étant activée pour distribuer une quantité de matière de la cuve d'alimentation (20) dans le réservoir (12) par l'intermédiaire du dispositif de transmission mis en place.

15. Procédé selon l'une quelconque des revendications 8 à 14, **caractérisé en ce que** la matière est acheminée automatiquement une fois que la sonde (18) et l'entonnoir d'écoulement (36) sont couplés l'un à l'autre.
